# EUROPEAN PATENT SPECIFICATION

(11) **EP 3 810 689 B1**
(45) Date of publication and mention of the grant of the patent: **25.10.2023**
(21) Application number: 19737310.3
(22) Date of filing: 12.06.2019
(51) Int. Cl.: C08K 5/00, C08K 5/16, C08K 5/3492, C08K 5/5313, C08L 67/02

(54) **THERMOPLASTIC COMPOSITION, METHOD FOR THE MANUFACTURE THEREOF, AND ARTICLES PREPARED THEREFROM**
THERMOPLASTISCHE ZUSAMMENSETZUNG, VERFAHREN ZUR HERSTELLUNG DAVON UND DARAUS HERGESTELLTE ARTIKEL
COMPOSITION THERMOPLASTIQUE, SON PROCÉDÉ DE FABRICATION ET ARTICLES PRÉPARÉS À PARTIR DE LA COMPOSITION

(30) Priority: 25.06.2018 EP 18179502
(43) Date of publication of application: 28.04.2021
(73) Proprietor: SHPP Global Technologies B.V., 4612 PX Bergen op Zoom (NL)
(72) Inventor: LEE, Jung Ah, New York 12158 (US); TODT, Michael Leslie, New York 12158 (US)
(74) Representative: Lang, Johannes
(86) International application number: PCT/US2019/036708
(87) International publication number: WO 2020/005544

(56) References cited:
- US-A1- 2011 319 536
- US-A1- 2014 066 551
- US-B2- 7 812 077
- US-B2- 7 829 614

## Description

### BACKGROUND

Poly(arylene ether)s are commercially attractive materials because of their unique combination of properties, including, for example, high temperature resistance, dimensional and hydrolytic stability, and electrical properties. Combinations of poly(arylene ether) with polyesters into compatibilized poly(arylene ether)/polyester blends are useful for various applications. Compatibilized poly(arylene ether)-polyester blends seek to achieve a balance of properties needed for commercial applications, such as dimensional stability and impact strength. Known poly(arylene ether)/polyester blends do not provide a sufficient balance of properties to make them commercially attractive for many applications. For example, US 7 812 077 B2 disclose in col.1, 1.40-46 polyester compositions having the combination of good flame retardant properties not only at thicknesses of 1.5 mm or greater, but also at thicknesses of 0.8 mm or less, maintaining mechanical properties and/or heat properties. In table 1, example 2, a composition comprising 36,55% PBT, 5% PPO, 30% glass fibers, 12,5% of a zinc diethylphosphinic acid and 12,5% of melamine cyanurate is described. It is therefore apparent that a need continues to exist for improved poly(arylene ether)/polyester blends, which overcome at least one of the aforementioned difficulties.

### BRIEF DESCRIPTION

A composition comprises 30 to 75 weight percent a polyester; 1 to 20 weight percent of a poly(phenylene ether); 1 to 35 weight percent of a reinforcing filler comprising glass fibers; and 1 to 20 weight percent of a metal di(C₁₋₆ alkyl)phosphinate; and 0.5 to 5 weight percent of a nitrogen-containing flame retardant; wherein weight percent of each component is based on the total weight of the composition.

A method for the manufacture of the composition comprises melt blending the components of the composition.

Articles comprising the composition are also disclosed.

The above described and other features are exemplified by the following detailed description.

### DETAILED DESCRIPTION

The present inventors have discovered that compositions including specific components in particular amounts can exhibit enhanced flame retardancy with good retention of mechanical and electrical properties, particularly when compared to conventional halogen-free glass-filled, flame retardant polyester compositions. The compositions provided by the present disclosure can advantageously be used in a variety of applications, including automotive parts and electric and electronic applications (e.g., circuit breakers).

Accordingly, an aspect of the present disclosure is a composition comprising a polyester. Useful polyesters include, for example, polyesters having repeating units of the formula 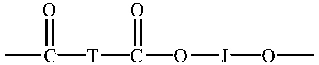 wherein J is a divalent group derived from a dihydroxy compound (including a reactive derivative thereof), and can be, for example, a C₁₋₁₀ alkylene, a C₅₋₂₀ cycloalkylene, a C₆₋₂₀ arylene, or a polyoxyalkylene in which the alkylene groups contain 2 to 6 carbon atoms, specifically 2, 3, or 4 carbon atoms; and T is a divalent group derived from a dicarboxylic acid (including a reactive derivative thereof), and can be, for example, a C₁₋₂₀ alkylene, a C₅₋₂₀ cycloalkylene, or a C₆₋₂₀ arylene. Copolyesters containing a combination of different T or J groups can be used. The polyester units can be branched or linear.

Useful polyesters can include aromatic polyesters, poly((C₁₋₁₀ alkylene) esters) including poly((C₁₋₁₀ alkylene) arylates), and poly(C₅₋₂₀ cycloalkylene diesters). Aromatic polyesters can have a polyester structure according to the above formula, wherein J and T are each aromatic groups as described above. In an embodiment, useful aromatic polyesters can include poly(isophthalate-terephthalate-resorcinol) esters, poly(isophthalate-terephthalate-bisphenol A) esters, poly[(isophthalate-terephthalate-resorcinol) ester-co-(isophthalate-terephthalate-bisphenol A)] ester, or a combination comprising at least one of these. Also contemplated are aromatic polyesters with a minor amount, e.g., 0.5 to 10 weight percent, based on the total weight of the polyester, of units derived from an aliphatic diacid or an aliphatic polyol to make copolyesters. Poly((C₁₋₈ alkylene) arylates) can have a polyester structure according to the above formula, wherein T comprises groups derived from aromatic dicarboxylates, cycloaliphatic dicarboxylic acids, or derivatives thereof. Examples of specifically useful T groups include 1,2-, 1,3-, and 1,4-phenylene; 1,4- and 1,5- naphthylenes; cis- or trans-1,4-cyclohexylene; and the like. Specifically, where T is 1,4-phenylene, the poly((C₁₋₈ alkylene) arylate) is a poly((C₁₋₈ alkylene) terephthalate). In addition, for poly((C₁₋₈ alkylene) arylate), useful alkylene groups J include, for example, ethylene, 1,4-butylene, and bis-((C₂₋₁₀ alkylene)-disubstituted cyclohexane) including cis- or trans-1,4-(cyclohexylene)dimethylene. Examples of poly((C₁₋₈ alkylene) terephthalates) include poly(ethylene terephthalate) (PET), poly(1,4-butylene terephthalate) (PBT), and poly(n-propylene terephthalate) (PPT). Also useful are poly((C₁₋₈ alkylene) naphthoates), such as poly(ethylene naphthanoate) (PEN), and poly(butylene naphthanoate) (PBN). A useful poly(cycloalkylene diester) is poly(1,4-cyclohexanedimethylene terephthalate) (PCT). Combinations comprising at least one of the foregoing polyesters can also be used.

Copolymers comprising alkylene terephthalate repeating ester units with other ester groups can also be useful. Specifically useful ester units can include different alkylene terephthalate units, which can be present in the polymer chain as individual units, or as blocks of poly((C₁₋₈ alkylene) terephthalates). Copolymers of this type include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly((C₅₋₁₂ cycloalkylene) diester)s can also include poly((C₅₋₁₂ cycloalkylene) cyclohexanedicarboxylate)s. Of these, a specific example is poly(1,4-cyclohexane-dimethanol-1,4-cyclohexanedicarboxylate) (PCCD), having recurring units of the formula 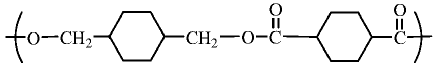 wherein J is a 1,4-cyclohexanedimethylene group derived from 1,4-cyclohexanedimethanol, and T is a cyclohexane ring derived from cyclohexanedicarboxylate or a chemical equivalent thereof, and can comprise the cis-isomer, the trans-isomer, or a combination comprising at least one of the foregoing isomers.

In a specific embodiment, the polyester comprises a poly((C₁₋₈ alkylene) terephthalate). Preferably, the poly((C₁₋₈ alkylene) terephthalate) is a poly(ethylene terephthalate), a poly(butylene terephthalate), or a combination thereof, preferably a poly(butylene terephthalate).

The polyester can be present in an amount of 30 to 75 weight percent, or 30 to 60 weight percent, or 35 to 55 weight percent, or greater than 40 to 75 weight percent, each based on the total weight of the composition.

In addition to the polyester, the composition further comprises a poly(phenylene ether). Poly(phenylene ether)s include those comprising repeating structural units having the formula 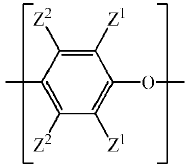 wherein each occurrence of Z¹ is independently halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and each occurrence of Z² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms. As one example, Z¹ can be a di-n-butylaminomethyl group formed by reaction of a terminal 3,5-dimethyl-1,4-phenyl group with the di-n-butylamine component of an oxidative polymerization catalyst.

The poly(phenylene ether) can comprise molecules having aminoalkyl-containing end group(s), typically located in a position ortho to the hydroxy group. Also frequently present are tetramethyldiphenoquinone (TMDQ) end groups, typically obtained from 2,6-dimethylphenol-containing reaction mixtures in which tetramethyldiphenoquinone byproduct is present. The poly(phenylene ether) can be in the form of a homopolymer, a copolymer, a graft copolymer, an ionomer, or a block copolymer, as well as combinations thereof.

In an aspect, the poly(phenylene ether) comprises a poly(phenylene ether)-polysiloxane block copolymer. As used herein, the term "poly(phenylene ether)-polysiloxane block copolymer" refers to a block copolymer comprising at least one poly(phenylene ether) block and at least one polysiloxane block.

In an aspect, the poly(phenylene ether)-polysiloxane block copolymer is prepared by an oxidative copolymerization method. In this method, the poly(phenylene ether)-polysiloxane block copolymer is the product of a process comprising oxidatively copolymerizing a monomer mixture comprising a monohydric phenol and a hydroxyaryl-terminated polysiloxane. In an aspect, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-diterminated polysiloxane can comprise a plurality of repeating units having the structure 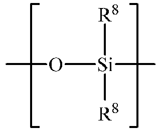 wherein each occurrence of R⁸ is independently hydrogen, C₁₋₁₂ hydrocarbyl or C₁₋₁₂ halohydrocarbyl; and two terminal units having the structure 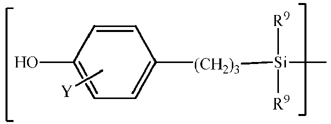 wherein Y is hydrogen, C₁₋₁₂ hydrocarbyl, C₁₋₁₂ hydrocarbyloxy, or halogen, and wherein each occurrence of R⁹ is independently hydrogen, C₁₋₁₂ hydrocarbyl, or C₁₋₁₂ halohydrocarbyl. In a very specific embodiment, each occurrence of R⁸ and R⁹ is methyl, and Y is methoxy.

In an aspect, the monohydric phenol comprises 2,6-dimethylphenol, and the hydroxyaryl-terminated polysiloxane has the structure 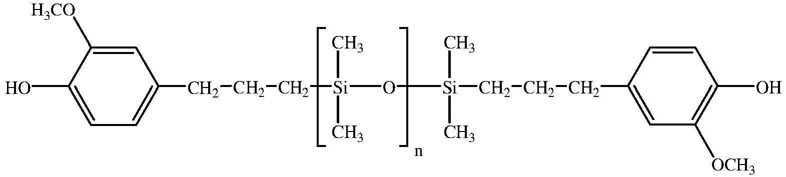 wherein n is, on average, 5 to 100, specifically 30 to 60.

The oxidative copolymerization method produces poly(phenylene ether)-polysiloxane block copolymer as the desired product and poly(phenylene ether) (without an incorporated polysiloxane block) as a by-product. It is not necessary to separate the poly(phenylene ether) from the poly(phenylene ether)-polysiloxane block copolymer. The poly(phenylene ether)-polysiloxane block copolymer can thus be utilized as a "reaction product" that includes both the poly(phenylene ether) and the poly(phenylene ether)-polysiloxane block copolymer. Certain isolation procedures, such as precipitation from isopropanol, make it possible to assure that the reaction product is essentially free of residual hydroxyaryl-terminated polysiloxane starting material. In other words, these isolation procedures assure that the polysiloxane content of the reaction product is essentially all in the form of poly(phenylene ether)-polysiloxane block copolymer. Detailed methods for forming poly(phenylene ether)-polysiloxane block copolymers are described in U.S. Patent Nos. 8,017,697 and 8,669,332 to Carrillo et al.

In an aspect, the poly(phenylene ether) has an intrinsic viscosity of 0.1 to 1 deciliter per gram measured by Ubbelohde viscometer at 25°C in chloroform. Within this range, the poly(phenylene ether) intrinsic viscosity can be 0.1 to 0.6 deciliter per gram, or 0.35 to 0.5 deciliter per gram, or 0.4 to 0.5 deciliter per gram.

In an aspect, the poly(phenylene ether) comprises a homopolymer or copolymer of monomers selected from the group consisting of 2,6-dimethylphenol, 2,3,6-trimethylphenol, and combinations thereof. In an aspect, the poly(phenylene ether) comprises a poly(2,6-dimethyl-1,4-phenylene ether) having an intrinsic viscosity of 0.4 to 0.5 deciliter per gram, determined by Ubbelohde viscometer at 25°C in chloroform.

In an aspect, the poly(phenylene ether) comprises a poly(phenylene ether)-polysiloxane block copolymer. In these embodiments, the poly(phenylene ether)-polysiloxane block copolymer can, for example, contribute 0.05 to 2 weight percent, specifically 0.1 to 1 weight percent, or 0.2 to 0.8 weight percent, of siloxane groups to the composition as a whole.

The composition comprises the poly(phenylene ether) in an amount of 1 to 20 weight percent, or 2 to 15 weight percent, or 3 to 13 weight percent, or 5 to 12 weight percent, or 5 to 10 weight percent, each based on the total weight of the composition.

In addition to the polyester and the poly(phenylene ether), the composition further comprises a reinforcing filler. The reinforcing filler comprises glass fibers. Suitable glass fibers include those based on E, A, C, ECR, R, S, D, and NE glasses, as well as quartz. In an aspect, the glass fiber has a diameter of 2 to 30 micrometers, specifically 5 to 25 micrometers, or 10 to 15 micrometers. In an aspect, the length of the glass fibers before compounding is 2 to 7 millimeters, specifically 3 to 5 millimeters. The glass fiber can, optionally, include a so-called adhesion promoter to improve its compatibility with the poly(phenylene ether) and the polystyrene. Adhesion promoters include chromium complexes, silanes, titanates, zirco-aluminates, propylene maleic anhydride copolymers, reactive cellulose esters, and the like. Suitable glass fiber is commercially available from suppliers including, for example, Owens Corning, Nippon Electric Glass, PPG, and Johns Manville.

The reinforcing filler can be present in an amount of 1 to 35 weight percent, or 5 to 35 weight percent, 10 to 35 weight percent, or 15 to 35 weight percent, each based on the total weight of the composition.

The composition further comprises a metal di(C₁₋₆ alkyl)phosphinate. As used herein, the term "metal di(C₁₋₆ alkyl)phosphinate" refers to a salt comprising at least one metal cation and at least one di(C₁₋₆ alkyl)phosphinate anion. In an aspect, the metal di(C₁₋₆ alkyl)phosphinate has the formula 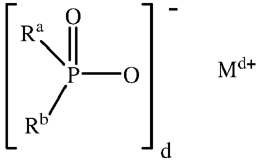 wherein R^{a} and R^{b} are each independently C₁₋₆ alkyl; M is calcium, magnesium, aluminum, or zinc; and d is 2 or 3. Examples of R^{a} and R^{b} include methyl, ethyl, n-propyl, isopropyl, n-butyl, tert-butyl, and n-pentyl. In an aspect, R^{a} and R^{b} are ethyl, M is aluminum, and d is 3 (that is, the metal di(C₁₋₆ alkyl)phosphinate is aluminum tris(diethylphosphinate)).

In an aspect, the metal di(C₁₋₆ alkyl)phosphinate is in particulate form. The metal di(C₁₋₆ alkyl)phosphinate particles can have a median particle diameter (D50) less than or equal to 40 micrometers, or a D50 less than or equal to 30 micrometers, preferably a D50 less than or equal to 25 micrometers. Additionally, the metal di(C₁₋₆ alkyl)phosphinate can be combined with a polymer, such as a poly(arylene ether), a polyolefin, a polyamide, a block copolymer, or combination thereof, to form a masterbatch. The metal di(C₁₋₆ alkyl)phosphinate masterbatch comprises the metal di(C₁₋₆ alkyl)phosphinate in an amount greater than is present in the thermoplastic composition. Employing a masterbatch for the addition of the metal di(C₁₋₆ alkyl)phosphinate to the other components of the composition can facilitate addition and improve distribution of the metal di(C₁₋₆ alkyl)phosphinate.

The metal di(C₁₋₆ alkyl)phosphinate is present in an amount of 1 to 20 weight percent, based on the total weight of the composition. Within this range, the metal di(C₁₋₆ alkyl)phosphinate can be present in an amount of 5 to 15 weight percent, or 5 to 12 weight percent, or 7 to 11 weight percent.

The composition further comprises a nitrogen-containing flame retardant. Nitrogen-containing flame retardants include those comprising a nitrogen-containing heterocyclic base and a phosphate or pyrophosphate or polyphosphate acid. In an aspect, the nitrogen-containing flame retardant has the formula 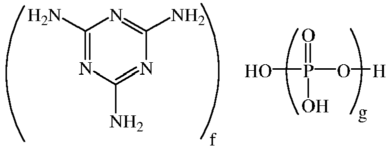 wherein g is 1 to 10,000, and the ratio of f to g is 0.5:1 to 1.7:1, or 0.7:1 to 1.3:1, or 0.9:1 to 1.1:1. It will be understood that this formula includes species in which one or more protons are transferred from the phosphate group(s) to the melamine group(s). When g is 1, the nitrogen-containing flame retardant is melamine phosphate (CAS Reg. No. 20208-95-1). When g is 2, the nitrogen-containing flame retardant is melamine pyrophosphate (CAS Reg. No. 15541 60-3). When g is, on average, greater than 2, the nitrogen-containing flame retardant is a melamine polyphosphate (CAS Reg. No. 56386-64-2). In an aspect, the nitrogen-containing flame retardant is melamine pyrophosphate, melamine polyphosphate, or a mixture thereof. In an aspect in which the nitrogen-containing flame retardant is melamine polyphosphate, g has an average value of greater than 2 to 10,000, or 5 to 1,000, or 10 to 500. In an aspect in which the nitrogen-containing flame retardant is melamine polyphosphate, g has an average value of greater than 2 to 500. Methods for preparing melamine phosphate, melamine pyrophosphate, and melamine polyphosphate are known in the art, and all are commercially available. For example, melamine polyphosphates can be prepared by reacting polyphosphoric acid and melamine, as described, for example, in U.S. Pat. No. 6,025,419 to Kasowski et al., or by heating melamine pyrophosphate under nitrogen at 290°C to constant weight, as described in U.S. Patent No. 6,015,510 to Jacobson et al. In an aspect, the nitrogen-containing flame retardant comprises melamine cyanurate. In an aspect, melamine cyanurate can be excluded from the composition.

The nitrogen-containing flame retardant can have a low volatility. For example, in an aspect, the nitrogen-containing flame retardant exhibits less than 1 percent weight loss by thermogravimetric analysis when heated at a rate of 20°C per minute from 25 to 280°C, or 25 to 300°C, or 25 to 320°C.

The nitrogen-containing flame retardant can be present in an amount of 0.5 to 5 weight percent, based on the total weight of the composition. Within this range, the nitrogen-containing flame retardant can be present in an amount of 0.5 to 4 weight percent, or 1 to 4 weight percent, or 2 to 3 weight percent.

In an aspect, the composition can further optionally comprise a hydrogenated block copolymer of an alkenyl aromatic monomer and a conjugated diene. For brevity, this component is referred to as the "hydrogenated block copolymer". The hydrogenated block copolymer can comprise 10 to 90 weight percent of poly(alkenyl aromatic) content and 90 to 10 weight percent of hydrogenated poly(conjugated diene) content, based on the weight of the hydrogenated block copolymer. In an aspect, the hydrogenated block copolymer is a low poly(alkenyl aromatic content) hydrogenated block copolymer in which the poly(alkenyl aromatic) content is 10 to less than 40 weight percent, or 20 to 35 weight percent, or 25 to 35 weight percent, yet or 30 to 35 weight percent, all based on the weight of the low poly(alkenyl aromatic) content hydrogenated block copolymer. In other embodiments, the hydrogenated block copolymer is a high poly(alkenyl aromatic content) hydrogenated block copolymer in which the poly(alkenyl aromatic) content is 40 to 90 weight percent, or 50 to 80 weight percent, or 60 to 70 weight percent, all based on the weight of the high poly(alkenyl aromatic content) hydrogenated block copolymer.

In an aspect, the hydrogenated block copolymer has a weight average molecular weight of 40,000 to 400,000 grams per mole. The number average molecular weight and the weight average molecular weight can be determined by gel permeation chromatography and based on comparison to polystyrene standards. In an aspect, the hydrogenated block copolymer has a weight average molecular weight of 200,000 to 400,000 grams per mole, or 220,000 to 350,000 grams per mole. In other embodiments, the hydrogenated block copolymer has a weight average molecular weight of 40,000 to 200,000 grams per mole, or 40,000 to 180,000 grams per mole, or 40,000 to 150,000 grams per mole.

The alkenyl aromatic monomer used to prepare the hydrogenated block copolymer can have the structure 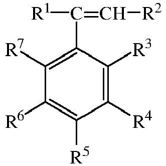 wherein R¹ and R² each independently represent a hydrogen atom, a C₁₋₈ alkyl group, or a C₂₋₈ alkenyl group; R³ and R⁷ each independently represent a hydrogen atom, a C₁₋₈ alkyl group, a chlorine atom, or a bromine atom; and R⁴, R⁵, and R⁶ each independently represent a hydrogen atom, a C₁₋₈ alkyl group, or a C₂₋₈ alkenyl group, or R⁴ and R⁵ are taken together with the central aromatic ring to form a naphthyl group, or R⁵ and R⁶ are taken together with the central aromatic ring to form a naphthyl group. Specific alkenyl aromatic monomers include, for example, styrene, chlorostyrenes such as p-chlorostyrene, methylstyrenes such as alpha-methylstyrene and p-methylstyrene, and t-butylstyrenes such as 3-t-butylstyrene and 4-t-butylstyrene. In an aspect, the alkenyl aromatic monomer is styrene.

The conjugated diene used to prepare the hydrogenated block copolymer can be a C₄₋₂₀ conjugated diene. Suitable conjugated dienes include, for example, 1,3-butadiene, 2-methyl-1,3-butadiene, 2-chloro-1,3-butadiene, 2,3-dimethyl-1,3-butadiene, 1,3-pentadiene, 1,3-hexadiene, and the like, and combinations thereof. In an aspect, the conjugated diene is 1,3-butadiene, 2-methyl-1,3-butadiene, or a combination thereof. In an aspect, the conjugated diene is 1,3-butadiene.

The hydrogenated block copolymer is a copolymer comprising (A) at least one block derived from an alkenyl aromatic compound and (B) at least one block derived from a conjugated diene, in which the aliphatic unsaturated group content in the block (B) is at least partially reduced by hydrogenation. In an aspect, the aliphatic unsaturation in the (B) block is reduced by at least 50 percent, or at least 70 percent. The arrangement of blocks (A) and (B) includes a linear structure, a grafted structure, and a radial teleblock structure with or without a branched chain. Linear block copolymers include tapered linear structures and non-tapered linear structures. In an aspect, the hydrogenated block copolymer has a tapered linear structure. In an aspect, the hydrogenated block copolymer has a non-tapered linear structure. In an aspect, the hydrogenated block copolymer comprises a (B) block that comprises random incorporation of alkenyl aromatic monomer. Linear block copolymer structures include diblock (A-B block), triblock (A-B-A block or B-A-B block), tetrablock (A-B-A-B block), and pentablock (A-B-A-B-A block or B-A-B-A-B block) structures as well as linear structures containing 6 or more blocks in total of (A) and (B), wherein the molecular weight of each (A) block can be the same as or different from that of other (A) blocks, and the molecular weight of each (B) block can be the same as or different from that of other (B) blocks. In an aspect, the hydrogenated block copolymer is a diblock copolymer, a triblock copolymer, or a combination thereof.

In an aspect, the hydrogenated block copolymer excludes the residue of monomers other than the alkenyl aromatic compound and the conjugated diene. In an aspect, the hydrogenated block copolymer consists of blocks derived from the alkenyl aromatic compound and the conjugated diene. It does not comprise grafts formed from these or any other monomers. It also consists of carbon and hydrogen atoms and therefore excludes heteroatoms. In an aspect, the hydrogenated block copolymer includes the residue of one or more acid functionalizing agents, such as maleic anhydride. In an aspect, the hydrogenated block copolymer comprises a polystyrene-poly(ethylene-butylene)-polystyrene triblock copolymer.

In an aspect, the hydrogenated block copolymer is a polystyrene-poly(ethylenebutylene)-polystyrene triblock copolymer having a polystyrene content of 10 to 50 weight percent, or 20 to 40 weight percent, or 25 to 35 weight percent, based on the weight of the polystyrene-poly(ethylene-butylene)-polystyrene triblock copolymer. In these aspects, the polystyrene-poly(ethylene-butylene)-polystyrene triblock copolymer can, optionally, have a weight average molecular weight of 200,000 to 400,000 grams per mole, or 250,000 to 350,000 grams per mole, determined by to size exclusion chromatography using polystyrene standards.

Methods for preparing hydrogenated block copolymers are known in the art and many hydrogenated block copolymers are commercially available. Illustrative commercially available hydrogenated block copolymers include the polystyrene-poly(ethylene-propylene) diblock copolymers available from Kraton Performance Polymers Inc. as KRATON^{™} G1701 (having 37 weight percent polystyrene) and G1702 (having 28 weight percent polystyrene); the polystyrene-poly(ethylene-butylene)-polystyrene triblock copolymers available from Kraton Performance Polymers Inc.as KRATON^{™} G1641 (having 33 weight percent polystyrene), G1650 (having 30 weight percent polystyrene), G1651 (having 33 weight percent polystyrene), and G1654 (having 31 weight percent polystyrene); and the polystyrene-poly(ethylene-ethylene/propylene)-polystyrene triblock copolymers available from Kuraray as SEPTON^{™} S4044, S4055, S4077, and S4099. Additional commercially available hydrogenated block copolymers include polystyrene-poly(ethylene-butylene)-polystyrene (SEBS) triblock copolymers available from Dynasol as CALPRENE^{™} H6140 (having 31 weight percent polystyrene), H6170 (having 33 weight percent polystyrene), H6171 (having 33 weight percent polystyrene), and H6174 (having 33 weight percent polystyrene); and from Kuraray as SEPTON^{™} 8006 (having 33 weight percent polystyrene) and 8007 (having 30 weight percent polystyrene); polystyrene-poly(ethylene-propylene)-polystyrene (SEPS) copolymers available from Kuraray as SEPTON^{™} 2006 (having 35 weight percent polystyrene) and 2007 (having 30 weight percent polystyrene); and oil-extended compounds of these hydrogenated block copolymers available from Kraton Performance Polymers Inc.as KRATON^{™} G4609 (containing 45% mineral oil, and the SEBS having 33 weight percent polystyrene) and G4610 (containing 31% mineral oil, and the SEBS having 33 weight percent polystyrene); and from Asahi as TUFTEC^{™} H1272 (containing 36% oil, and the SEBS having 35 weight percent polystyrene). Mixtures of two of more hydrogenated block copolymers can be used. In an aspect, the hydrogenated block copolymer comprises a polystyrene poly(ethylene-butylene)-polystyrene triblock copolymer having a weight average molecular weight of at least 100,000 grams per mole, or 200,000 to 400,000 grams per mole.

When present, the composition comprises the hydrogenated block copolymer in an amount of 1 to 20 weight percent, based on the total weight of the composition. Within this range, the hydrogenated block copolymer amount can be 2 to 10 weight percent, or 5 to 9 weight percent.

In an aspect, the composition can optionally further comprise an additive composition. The additive composition comprises one or more additives. The additives can be, for example, stabilizers, mold release agents, lubricants, processing aids, drip retardants, nucleating agents, UV blockers, dyes, pigments, antioxidants, anti-static agents, blowing agents, mineral oil, metal deactivators, antiblocking agents, or a combination thereof. When present, such additives are typically used in a total amount of less than or equal to 5 weight percent, or less than or equal to 3 weight percent, or less than or equal to 2 weight percent, based on the total weight of the composition.

In a specific embodiment, the composition can comprise 5 to 15 weight percent of a poly(phenylene ether) comprising poly(2,6-dimethyl-1,4-phenylene ether), a poly(phenylene ether)-polysiloxane block copolymer, or a combination thereof; 30 to 60 weight percent a poly(butylene terephthalate); 15 to 35 weight percent of a reinforcing filler comprising glass fibers; and 5 to 15 weight percent of aluminum diethylphosphinate; 0.5 to 5 weight percent of melamine polyphosphate; 2 to 15 weight percent of a hydrogenated block copolymer of an alkenyl aromatic monomer and a conjugated diene; and 0.1 to 5 weight percent of an additive composition; wherein weight percent of each component is based on the total weight of the composition.

In an aspect, the composition can optionally exclude any polymer other than the poly(phenylene ether), the polyester, and, when present, the hydrogenated block copolymer. For example, in an aspect, the composition excludes polyetherimide.

The composition of the present disclosure advantageously exhibits one or more of the following properties.

In an aspect, the composition can have a UL94 flammability rating of V0 determined using a 3.0 millimeter thick molded sample comprising the composition.

In an aspect, the composition can have a UL94 flammability rating of V0 or V1 determined using a 1.0 millimeter thick molded sample comprising the composition, preferably a UL94 flammability rating of V0 determined using a 1.0 millimeter thick molded sample comprising the composition.

In an aspect, the composition can have a Charpy Impact Strength of 2.4 kJ/m2 or more, determined according to ISO 179 at 23°C.

In an aspect, the composition can have a flexural modulus of greater than 4300 MPa determined according to ISO 178.

In an aspect, the composition can have a heat deflection temperature of greater than 200°C, determined according to ISO 75 at a heating rate of 120°C/hour.

In an aspect, the composition can have a tensile elongation at break of 1.5 to 3.5%, determined according to ASTM D638-03.

In an aspect, the composition can have a specific gravity of less than or equal to 1.50, as determined according to ASTM D792-10.

In an aspect, the composition can have a comparative tracking index performance level category of 2 or better.

In an aspect, the composition can have a high voltage tracking resistance performance level category of 5 or better.

The composition can be prepared by melt-blending or melt-kneading the components of the composition. The melt-blending or melt-kneading can be performed using common equipment such as ribbon blenders, HENSCHEL^{™} mixers, BANBURY^{™} mixers, drum tumblers, single-screw extruders, twin-screw extruders, multi-screw extruders, co-kneaders, and the like. For example, the present composition can be prepared by melt-blending the components in a twin-screw extruder at a temperature of 270 to 310°C, or 280 to 300°C.

The composition is also useful for forming a variety of articles, including automotive, electrical, and electronic components. The composition can be particularly useful for use in circuit breakers due to the improved properties discussed above. Suitable methods of forming such articles include single layer and multilayer sheet extrusion, injection molding, blow molding, film extrusion, profile extrusion, pultrusion, compression molding, thermoforming, pressure forming, hydroforming, vacuum forming, and the like. Combinations of the foregoing article fabrication methods can be used.

This disclosure is further illustrated by the following examples, which are nonlimiting.

### EXAMPLES

Materials used for the following examples are described in Table 1.

**Table 1**

| Component | Description | Supplier |
|---|---|---|
| PPE-1 | Poly(2,6-dimethyl-1,4-phenylene ether), CAS Reg. No. 25134-01-4, having an intrinsic viscosity of 0.30 deciliter per gram as measured in chloroform at 25°C and a weight average molecular weight of 45,000 grams per mole relative to polystyrene standards; obtained as PPO 630 | SABIC |
| PPE-2 | Poly(2,6-dimethyl-1,4-phenylene ether), CAS Reg. No. 25134-01-4, having an intrinsic viscosity of 0.46 deciliter per gram as measured in chloroform at 25°C; obtained as PPO 646 | SABIC |
| PPE-Si | Poly(2,6-dimethyl-1,4-phenylene ether)-polydimethylsiloxane block copolymer with 5 weight percent polysiloxane content and an intrinsic viscosity of 0.40 deciliter per gram as measured at 25°C in chloroform; obtained as PPO 843 | SABIC |
| PBT-1 | Poly(1,4-butylene terephthalate), CAS Reg. No. 26062-94-2, having an intrinsic viscosity of 1.2 deciliters/gram as measured at 30°C in a 1:1 (w/w) solution of phenol: 1,1,2,2-tetrachloro ethane, and having 38 meq/kg of COOH; obtained as VALOX^{™} 315 | SABIC |
| PBT-2 | Poly(1,4-butylene terephthalate), CAS Reg. No. 26062-94-2, having an intrinsic viscosity of 0.70 deciliters/gram as measured at 30°C in a 1:1 (w/w) solution of phenol: 1,1,2,2-tetrachloro ethane, and having 17 meq/kg of COOH; obtained as VALOX^{™} 195 | SABIC |
| PEI | Polyetherimide derived from bisphenol A and meta-phenylene diamine having a glass transition temperature of 217°C, obtained at ULTEM 1000 | SABIC |
| SEBS | Polystyrene-poly(ethylene-butylene)-polystyrene triblock copolymer, CAS Reg. No. 66070-58-4 having a polystyrene content of 27.7-30.7 weight percent; obtained as KRATON^{™} G1650 | Kraton Performance Polymers Inc. |
| Citric acid | Citric acid, CAS Reg. No. 77-92-9 | Intercontinental |
| DEPAL | Aluminum tris(diethyl phosphinate), CAS Reg. No. 225789-38-8; obtained as EXOLIT OP1230 | Clariant |
| MPP | Melamine polyphosphate, CAS Reg. No. 56386-64-2, obtained as MELAPUR 200 | BASF Corp |
| PHBPP | Pentaerythritol 3-(4-hydroxy-3,5-di-tert-butylphenyl)propionate (1:4), CAS Reg. No. 6683-19-8; obtained as IRGANOX 1010 | BASF Corp |
| Compatibilizer | A polymeric compatibilizer having an epoxy content of 3500 meq/kg, a number average molecular weight of 6800 grams per mole, and an average of 24 pendant epoxy groups per molecule; obtained as Joncryl 4368 | Johnson Polymers |
| Glass fibers | Chopped glass fibers having a diameter of 10 micrometers, a pre-compounded length of 3.2 millimeters; obtained as CHOPVANTAGE 3540 | PPG Industries |

Compositions are described in Table 2. The examples were made by blending all components with the exception of the glass fibers. The blends were compounded on a Werner-Pfleiderer 30 mm co-rotating extruder, where the glass fibers were fed separately downstream of the blend. The extruder temperature settings (upstream to downstream) were 240-270-290-290-290-290-290-290-280°C. The screw rotation rate was 300 RPM.

Molding of parts was performed on a 85 Van Dorn injection molding machine with temperature settings of 260-260-260-260° C. (from throat to nozzle) and a mold temperature of 70° C. Prior to molding the pellets were pre-dried at 110° C. for 2-4 hrs.

Test specimens were evaluated for Charpy Impact Strength at 23 and -30°C in accordance with ISO 179, and results are expressed in units of kJ/m².

Notched IZOD impact strength was determined at 23°C and at -35°C in accordance with ISO 180, and is reported in kJ/m².

Flexural modulus was determined in accordance with ISO 178 using multipurpose ISO 3167 Type A specimens, and results are expressed in units of MPa.

Flexural strength Stress at break was determined according to ISO 178, and results are expressed in units of MPa.

Heat deflection temperature (HDT, °C) was determined according to ISO 75 at a heating rate of 120°C/hour.

The Dynatup energy to maximum load and energy to failure were determined according to ASTM D3763, and results are expressed in Joules.

Tensile modulus was determined according to ISO 527, and results are expressed in MPa.

Tensile stress and strain at break were determined according to ISO 527 using a testing speed of 50 millimeters/minute, and are reported in units of MPa and %, respectively.

UL94 testing was employed for the flame retardance testing with both 3.0 and 1.0 millimeter thick flame bars.

Specific gravity was determined according to ASTM D792-10.

Melt-volume flow rate (MVR) was determined according to ISO 1133 at 250°C and 280°C using a 5 kilogram load, and the results are reported in cm³/10 minutes.

Melt viscosity (MV) was determined according to ISO11443 at 280°C using a shear rate of 1500 sec⁻¹, and the results are reported in Pa-s.

High voltage arc resistance (HVAR) was determined according to ASTM D495, and is reported in terms of Performance Level Categories (PLC). In accordance with ASTM D-495, performance is expressed as the number of seconds that a material resists the formation of a surface conducting path when subjected to an intermittently occurring arc of high voltage, low current characteristics. The results of testing the nominal 3 mm thickness are considered representative of the material's performance in any thickness. A D495 mean time of arc resistance of 420 seconds or longer is assigned a PLC of 0; a mean time of arc resistance of 360-419 seconds is assigned a PLC of 1; a mean time of arc resistance of 300-359 seconds is assigned a PLC of 2; a mean time of arc resistance of 240-299 seconds is assigned a PLC of 3; a mean time of arc resistance of 180-239 seconds is assigned a PLC of 4; a mean time of arc resistance of 120-179 seconds is assigned a PLC of 5; a mean time of arc resistance of 60-119 seconds is assigned a PLC of 6; and a mean time of arc resistance of less than 60 seconds is assigned a PLC of 7. Particularly useful formulations can preferably have a PLC of 5 or less.

Comparative tracking index (CTI) was determined in accordance with UL 746A, and is reported in terms of Performance Level Categories (PLC). Performance is expressed as the voltage which causes tracking after 50 drops of 0.1% ammonium chloride solution have fallen on the material. The results of testing the nominal 3 mm thickness are considered representative of the material's performance in any thickness. A CTI of 600 Volts or greater is assigned a PLC of 0; a CTI of 400-599 Volts is assigned a PLC of 1; a CTI of 250-399 Volts is assigned a PLC or 2; a CTI of 174-249 Volts is assigned a PLC of 3; a CTI of 100-174 Volts is assigned a PLC of 4; and a CTI of less than 100 Volts is assigned a PLC of 5. Particularly useful formulations can preferably have a PLC of 2 or less.

High voltage tracking resistance (HVTR) was determined according to UL 746A and is reported in terms of Performance Level Categories (PLC). Performance is expressed as the rate in mm/min that a tracking path can be produced on the surface of the material under standardized test conditions. Note is made if ignition of the material takes place. The results of testing the nominal 3 mm thickness are considered representative of the material's performance in any thickness. An HVTR range of 0-10 mm/min is assigned a PLC of 0; an HVTR range of 10.1-25.4 mm/min is assigned a PLC of 1; an HVTR range of 25.5-80 mm/min is assigned a PLC of 2; an HVTR range of 80.1-150 mm/min is assigned a PLC of 3; and an HVTR of greater than 150 mm/min is assigned a PLC of 4. Particularly useful formulations can preferably have a PLC of 0 (zero).

The compositions and properties for Examples 1-9 and Comparative Example 1 are shown below in Table 2. The amount of each component is shown in weight percent, based on the total weight of the composition.

**Table 2a**

| **Component** | **E1** | **E2** | **E3** | **E4** | **E5** | **E6** | **E7** | **E8** | **E9** | **E10** | **CE1** |
|---|---|---|---|---|---|---|---|---|---|---|---|
| PPE-1 | 10 | | | 10 | | | 10 | | | 10 | |
| PPE-2 | | 10 | | | 10 | | | 10 | | | |
| PPE-Si | | | 10 | | | 10 | | | 10 | | |
| PBT-1 | | | | 67.2 | 67.2 | 67.2 | 66.2 | 66.2 | 66.2 | 35 | |
| PBT-2 | 67.2 | 67.2 | 67.2 | | | | | | | 32.2 | 77.7 |
| PEI | | | | | | | | | | | |
| SEBS | | | | | | | | | | | |
| Citric acid | 0.5 | 0.5 | 0.5 | 0.5 | 0.5 | 0.5 | 0.5 | 0.5 | 0.5 | 0.5 | |
| DEPAL | 9 | 9 | 9 | 9 | 9 | 9 | 9 | 9 | 9 | 9 | 9 |
| MPP | 3 | 3 | 3 | 3 | 3 | 3 | 3 | 3 | 3 | 3 | 3 |
| PHBPP | 0.3 | 0.3 | 0.3 | 0.3 | 0.3 | 0.3 | 0.3 | 0.3 | 0.3 | 0.3 | 0.3 |
| Compatibilizer | | | | | | | 1 | 1 | 1 | | |
| Glass fibers | 10 | 10 | 10 | 10 | 10 | 10 | 10 | 10 | 10 | 10 | 10 |
| Pigment | | | | | | | | | | | |

| **Properties** | | | | | | | | | | | |
|---|---|---|---|---|---|---|---|---|---|---|---|
| Notched IZOD Impact (23°C) | | | | | | | | | | | |
| Notched IZOD Impact (-35°C) | | | | | | | | | | | |
| Charpy Impact (23°C) | 3.2 | 3.0 | 3.0 | 2.9 | 3.5 | 3.5 | 2.7 | 2.7 | 3.0 | 3.4 | 3.4 |
| Charpy Impact (-30°C) | 3.0 | 2.8 | 2.9 | 2.8 | 2.8 | 2.8 | 2.5 | 2.4 | 2.6 | 2.7 | 3.5 |
| Flex. Modulus | 4728.7 | 4635.0 | 4610.7 | 4692.3 | 4489.7 | 4492.7 | 4771.7 | 4655.0 | 4731.3 | 4498.3 | 4595.7 |
| Flex Strength | 99.9 | 99.7 | 99.4 | 97.1 | 101.7 | 101.4 | 119.3 | 119.3 | 119.4 | 104.1 | 109.0 |
| HDT (0.45 MPa) | 209.6 | 210.3 | 211.3 | 208.8 | 208.2 | 207.9 | 203.1 | 206.4 | 204.1 | 210.2 | 215.5 |
| HDT (1.8 MPa) | | | | 76.2 | 74.0 | 63.2 | 22.8 | 50.8 | 20.0 | | |
| Energy to max. load | 3.0 | 3.4 | 3.3 | 3.6 | 2.6 | 3.5 | 4.4 | 3.9 | 4.2 | 4.0 | 4.2 |
| Energy to failure | 3.7 | 3.9 | 3.9 | 4.1 | 3.7 | 4.3 | 4.8 | 4.4 | 4.7 | 4.5 | 4.7 |
| Tensile Modulus | 4903.0 | 4861.0 | 4867.0 | 4801.6 | 4700.6 | 4724.0 | 4992.4 | 4905.8 | 4981.0 | 4769.8 | 4815.8 |
| Tens. Stress at Brk | 56.3 | 54.4 | 54.3 | 55.7 | 57.4 | 57.2 | 72.2 | 72.0 | 71.7 | 60.6 | 60.9 |
| Tens. Strain at Brk | 2.1 | 2.0 | 2.0 | 2.3 | 2.4 | 2.4 | 2.6 | 2.6 | 2.8 | 2.4 | 1.9 |
| UL94 (3.0 mm) | V0 | V0 | V0 | V0 | V0 | V0 | V0 | V0 | V0 | V0 | V0 |
| UL94 (1.0 mm) | V0 | V1 | V0 | V0 | V0 | V0 | V0 | V1 | V0 | V1 | V2 |
| Specific Gravity | 1.367 | 1.366 | 1.365 | 1.362 | 1.364 | 1.363 | 1.362 | 1.364 | 1.363 | 1.363 | 1.364 |
| MVR (250°C, 5 kg) | 33.38 | 28.86 | 23.28 | 6.58 | 5.48 | 4.60 | 0.46 | 3.00 | 0.34 | 12.26 | 17.90 |
| MVR (280°C, 5 kg) | | | | 76.2 | 74.0 | 63.2 | 22.8 | 50.8 | 20.0 | | |
| MV (280°C, 1500 s') | 62.6 | 57.5 | 65.0 | 131.8 | 135.4 | 140.8 | 149.9 | 145.9 | 149.1 | 82.1 | 1.6 |
| HVAR | 5 | 5 | 5 | 5 | 5 | 5 | 5 | 5 | 5 | 5 | 5 |
| CTI | 2 | 3 | 2 | 2 | 2 | 2 | 2 | 2 | 1 | 2 | 2 |
| HVTR (3.0 mm) | 0 | 0 | 0 | 0 | 0 | 0 | 0 | 0 | 0 | 0 | 0 |

**Table 2b**

| **Component** | **E11** | **E12** | **E13** | **E14** | **E15** | **E16** | **E17** | **E18** | **E19** | **E20** | **E21** | **E22** | **CE2** | **CE3** | **CE4** | **CE5** | **CE6** |
|---|---|---|---|---|---|---|---|---|---|---|---|---|---|---|---|---|---|
| PPE-1 | 5 | 10 | 10 | 10 | 10 | | 10 | 10 | | 10 | 10 | | | | | | |
| PPE-2 | | | | | | | | | | | | | 18 | 16 | 14 | | |
| PPE-Si | | | | | | 10 | | | 10 | | | 10 | | | | | |
| PBT-1 | 68.5 | 68.5 | 67.5 | 56.5 | 55.5 | 56.5 | 51.5 | 50.5 | 51.5 | 41.5 | 40.5 | 41.5 | | | | 32.4 | 27.8 |
| PBT-2 | | | | | | | | | | | | | 66.5 | 59.5 | 53.5 | 32.4 | 20 |
| PEI | | | | | | | | | | | | | | | | | 7 |
| SEBS | | | | 7 | 7 | 7 | 7 | 7 | 7 | 7 | 7 | 7 | 14 | 13 | 11 | | |
| Citric acid | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | | |
| DEPAL | 9 | 9 | 9 | 9 | 9 | 9 | 9 | 9 | 9 | 9 | 9 | 9 | | | | 15 | 9 |
| MPP | 2 | 2 | 2 | 2 | 2 | 2 | 2 | 2 | 2 | 2 | 2 | 2 | | | | 5 | 3.5 |
| PHBPP | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 | 0.2 |
| Compatibilizer | | | 1 | | 1 | | | 1 | | | 1 | | 1 | 1 | 1 | | |
| Glass fibers | 15 | 10 | 10 | 15 | 15 | 15 | 20 | 20 | 20 | 30 | 30 | 30 | | 10 | 20 | 15 | 32.5 |
| Pigment | 0.1 | 0.1 | 0.1 | 0.1 | 0.1 | 0.1 | 0.1 | 0.1 | 0.1 | 0.1 | 0.1 | 0.1 | | | | | |

| **Properties** | | | | | | | | | | | | | | | | | |
|---|---|---|---|---|---|---|---|---|---|---|---|---|---|---|---|---|---|
| Notched IZOD Impact (23°C) | 5.6 | 4.9 | 2.7 | 5.4 | 4.1 | 5.0 | 5.3 | 4.7 | 5.8 | 6.3 | 5.5 | 5.7 | 10.4 | 5.0 | 6.3 | 6.0 | 14.0 |
| Notched IZOD Impact (-35°C) | 4.3 | 3.3 | 2.4 | 4.5 | 3.9 | 4.3 | 5.0 | 4.5 | 4.7 | 5.3 | 5.7 | 5.6 | NA | NA | NA | | NA |
| Charpy Impact (23°C) | 4.0 | 3.3 | 2.4 | 4.3 | 3.5 | 4.2 | 4.3 | 4.2 | 4.6 | 4.8 | 4.8 | 4.8 | 11.6 | | | 6.0 | 12.0 |
| Charpy Impact (-30°C) | | | | | | | | | | | | | 9.6 | | | | NA |
| Flex. Modulus | 5488.3 | 4330.0 | 4683.0 | 5010.7 | 5375.3 | 5059.0 | 6038.3 | 6774.0 | 6244.0 | 8721.3 | 9508.3 | 8670.3 | 1821.7 | 3471.7 | 5109.0 | 6400.0 | 9400.0 |
| Flex Strength | 122.1 | 105.3 | 118.6 | 114.3 | 124.8 | 112.1 | 125.6 | 136.2 | 125.9 | 142.6 | 153.6 | 142.1 | 70.7 | 85.5 | 125.2 | 130.0 | 180.0 |
| HDT (0.45 MPa) | 210.4 | 205.5 | 207.0 | 202.4 | 206.2 | 203.0 | 211.4 | 207.2 | 208.4 | 212.1 | 208.8 | 212.9 | 150.0 | | | 220.0 | 218.0 |
| HDT (1.8 MPa) | | | | | | | | | | | | | | 159.7 | 182.9 | 200.0 | 206.0 |
| Energy to max. load | 5.0 | 3.7 | 3.2 | 5.4 | 4.6 | 4.9 | 5.1 | 3.7 | 5.4 | 3.4 | 2.8 | 3.6 | 19.1 | 7.5 | 10.4 | | |
| Energy to failure | 6.0 | 4.4 | 4.1 | 6.1 | 5.3 | 5.9 | 5.7 | 4.7 | 6.3 | 4.5 | 3.9 | 5.0 | 20.7 | 14.3 | 17.0 | | 9.0 |

| | | | | | | | | | | | | | | | | | |
|---|---|---|---|---|---|---|---|---|---|---|---|---|---|---|---|---|---|
| Tensile Modulus | 5749.6 | 4551.8 | 4954.0 | 5234.0 | 5509.0 | 5196.2 | 6373.0 | 6814.2 | 6335.4 | 8900.6 | 9398.6 | 8718.6 | 1946.6 | 3870.4 | 5801.8 | 7500.0 | 11500.0 |
| Tens. Stress at Brk | 77.3 | 59.9 | 71.7 | 70.5 | 79.0 | 68.1 | 77.8 | 89.2 | 78.2 | 90.7 | 98.1 | 86.8 | 38.9 | 59.4 | 85.8 | 80.0 | 140.0 |
| Tens. Strain at Brk | 3.3 | 3.2 | 2.7 | 2.8 | 2.8 | 2.7 | 2.5 | 2.4 | 2.5 | 1.9 | 1.6 | 1.8 | 36.2 | 2.0 | 2.2 | 3.0 | 2.4 |
| UL94 (3.0 mm) | V0 | V0 | V0 | V1 | V1 | V0 | V0 | V1 | V0 | V0 | V0 | V1 | Fails | Fails | Fails | V0 | V0 |
| UL94 (1.0 mm) | V0 | V0 | V0 | V1 | V1 | V1 | V1 | V1 | V1 | V1 | V1 | V1 | Fails | Fails | Fails | V0 | V0 |
| Specific Gravity | 1.412 | 1.361 | 1.361 | 1.353 | 1.353 | 1.352 | 1.388 | 1.389 | 1.387 | 1.460 | 1.459 | 1.461 | 1.195 | 1.255 | 1.323 | 1.450 | 1.600 |
| MVR (250°C, 5 kg) | | | | | | | | | | | | | | | | 17.0 | 12.4 |
| MVR (280°C, 5 kg) | 80.3 | 71.6 | 8.1 | 30.1 | 3.9 | 22.1 | 26.9 | 3.0 | 14.6 | 16.0 | 4.5 | 8.4 | 52.3 | 9.6 | 3.2 | NA | NA |
| MV (280°C, 1500 s⁻¹) | 112.9 | 129.7 | 165.4 | 150.7 | 173.5 | 143.0 | 103.2 | 146.6 | NA | 120.9 | 138.0 | NA | NA | NA | NA | NA | NA |
| HVAR | 5 | 5 | 5 | 5 | 5 | 5 | 5 | 5 | 5 | 5 | 5 | 5 | 6 | 6 | 6 | 6 | 6 |
| CTI | 2 | 2 | 2 | 2 | 2 | 2 | 1 | 1 | 2 | 2 | 2 | 2 | 0 | NA | NA | 1 | 2 |
| HVTR (3.0 mm) | 0 | 0 | 0 | 0 | 0 | 0 | 0 | 0 | 0 | 0 | 0 | 0 | 0 | 0 | 0 | 0 | 0 |

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity, and are to be construed to cover both the singular and the plural, unless otherwise indicated herein or clearly contradicted by context. "Or" means "and/or" unless clearly stated otherwise. Reference throughout the specification to "an aspect", "some aspects", and so forth, means that a particular element described in connection with the aspect is included in at least one aspect described herein, and may or may not be present in other aspects. In addition, it is to be understood that the described elements may be combined in any suitable manner in the various aspects.

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash ("-") that is not between two letters or symbols is used to indicate a point of attachment for a substituent. For example, -CHO is attached through carbon of the carbonyl group.

As used herein, the term "hydrocarbyl", whether used by itself, or as a prefix, suffix, or fragment of another term, refers to a residue that contains only carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like, or it can contain heteroatoms within the backbone of the hydrocarbyl residue. The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example - CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A composition comprising:
30 to 75 weight percent a polyester;
1 to 20 weight percent of a poly(phenylene ether);
1 to 35 weight percent of a reinforcing filler comprising glass fibers; and
1 to 20 weight percent of a metal di(C₁₋₆ alkyl)phosphinate; and
0.5 to 5 weight percent of a nitrogen-containing flame retardant;
wherein weight percent of each component is based on the total weight of the composition.

2. The composition of claim 1, wherein the composition exhibits one or more of:
a UL94 flammability rating of V0 determined using a 3.0 millimeter thick molded sample comprising the composition;
a UL94 flammability rating of V0 or V1 determined using a 1.0 millimeter thick molded sample comprising the composition, preferably a UL94 flammability rating of V0 determined using a 1.0 millimeter thick molded sample comprising the composition;
a Charpy Impact Strength of 2.4 kJ/m² or more, determined according to ISO 179 at 23°C;
a flexural modulus of greater than 4300 MPa determined according to ISO 178;
a heat deflection temperature of greater than 200°C, determined according to ISO 75 at a heating rate of 120°C/hour; and
a tensile elongation at break of 1.5 to 3.5%, determined according to ASTM D638-03.

3. The composition of claim 1 or 2, wherein the composition has a specific gravity of less than or equal to 1.50, as determined according to ASTM D792-10.

4. The composition of any one or more of claims 1 to 3, wherein the poly(phenylene ether) comprises a poly(2,6-dimethyl-1,4-phenylene ether).

5. The composition of any one or more of claims 1 to 4, wherein the poly(phenylene ether) comprises a poly(phenylene ether)-polysiloxane block copolymer.

6. The composition of any one or more of claims 1 to 5, wherein the poly(phenylene ether) has an intrinsic viscosity of 0.1 to 0.6 deciliters per gram, as measured in chloroform at 25°C using an Ubbelohde viscometer.

7. The composition of any one or more of claims 1 to 6, wherein the polyester comprises a poly((C₁₋₈ alkylene) terephthalate), preferably wherein the poly((C₁₋₈ alkylene) terephthalate) is a poly(ethylene terephthalate), a poly(butylene terephthalate), or a combination thereof, preferably a poly(butylene terephthalate).

8. The composition of any one or more of claims 1 to 7, wherein the metal di(C₁₋₆ alkyl)phosphinate comprises aluminum diethylphosphinate.

9. The composition of any one or more of claims 1 to 8, wherein the nitrogen-containing flame retardant comprises melamine polyphosphate, melamine cyanurate, melamine pyrophosphate, melamine phosphate, or a combination thereof, preferably melamine polyphosphate.

10. The composition of any one or more of claims 1 to 9, further comprising an additive composition comprising an antioxidant, a lubricant, a thermal stabilizer, an ultraviolet light absorbing additive, a plasticizer, an anti-dripping agent, a mold release agent, an antistatic agent, a dye, a pigment, a laser marking additive, a radiation stabilizer, a compatibilizer, arc suppressant, or a combination thereof.

11. The composition of any one or more of claims 1 to 10, further comprising an impact modifier, preferably a hydrogenated block copolymer of an alkenyl aromatic monomer and a conjugated diene, more preferably wherein the hydrogenated block copolymer is a polystyrene-poly(ethylene-butylene)-polystyrene triblock copolymer having a polystyrene content of 5 to 20 weight percent, based on the weight of the polystyrene-poly(ethylene-propylene)-polystyrene triblock copolymer.

12. The composition of claim 1, comprising
5 to 15 weight percent of a poly(phenylene ether) comprising poly(2,6-dimethyl-1,4-phenylene ether), a poly(phenylene ether)-polysiloxane block copolymer, or a combination thereof;
30 to 60 weight percent a poly(butylene terephthalate);
10 to 35 weight percent of a reinforcing filler comprising glass fibers; and
5 to 15 weight percent of aluminum diethylphosphinate;
0.5 to 5 weight percent of melamine polyphosphate;
2 to 15 weight percent of a hydrogenated block copolymer of an alkenyl aromatic monomer and a conjugated diene; and
0.1 to 5 weight percent of an additive composition;
wherein weight percent of each component is based on the total weight of the composition.

13. The composition of any one or more of claims 1 to 12, wherein the composition exhibits
a comparative tracking index performance level category of 2 or better;
a high voltage tracking resistance performance level category of 5 or better;
or both.

14. The composition of any one or more of claims 1 to 13, wherein the composition excludes melamine cyanurate, a poly(etherimide), or both.

15. An article comprising the composition of any one or more of claims 1 to 14, preferably wherein the article is an injection molded article, more preferably a circuit breaker or an electrical connector.

## Patentansprüche

1. Zusammensetzung umfassend:
30 bis 75 Gewichtsprozent eines Polyesters;
1 bis 20 Gewichtsprozent eines Poly(phenylenethers);
1 bis 35 Gewichtsprozent eines verstärkenden Füllstoffs, der Glasfasern umfasst; und
1 bis 20 Gewichtsprozent eines Metalldi(C₁₋₆-alkyl)phosphinats; und
0,5 bis 5 Gewichtsprozent eines stickstoffhaltigen Flammschutzmittels;
wobei der Gewichtsprozentsatz jeder Komponente auf das Gesamtgewicht der Zusammensetzung bezogen ist.

2. Zusammensetzung nach Anspruch 1, wobei die Zusammensetzung eines oder mehrere der folgenden Merkmale zeigt:
eine UL94-Entflammbarkeitsbewertung von V0, bestimmt unter Verwendung einer 3,0 Millimeter dicken geformten Probe, die die Zusammensetzung umfasst;
eine UL94-Entflammbarkeitsbewertung von V0 oder V1, bestimmt unter Verwendung einer 1,0 Millimeter dicken geformten Probe, die die Zusammensetzung umfasst, vorzugsweise eine UL94-Entflammbarkeitsbewertung von V0, bestimmt unter Verwendung einer 1,0 Millimeter dicken geformten Probe, die die Zusammensetzung umfasst;
eine Charpy-Schlagzähigkeit von 2,4 kJ/m² oder mehr, bestimmt gemäß ISO 179 bei 23 °C;
ein Biegemodul von mehr als 4300 MPa, bestimmt nach ISO 178;
eine Wärmeformbeständigkeitstemperatur von mehr als 200 °C, bestimmt nach ISO 75 bei einer Erwärmungsrate von 120 °C/Stunde; und
eine Zugdehnung beim Bruch von 1,5 bis 3,5 %, bestimmt nach ASTM D638-03.

3. Zusammensetzung nach Anspruch 1 oder 2, wobei die Zusammensetzung ein spezifisches Gewicht von weniger als oder gleich 1,50 aufweist, bestimmt gemäß ASTM D792-10.

4. Zusammensetzung nach irgendeinem oder mehreren der Ansprüche 1 bis 3, wobei der Poly(phenylenether) einen Poly(2,6-dimethyl-1,4-phenylenether) umfasst.

5. Zusammensetzung nach irgendeinem oder mehreren der Ansprüche 1 bis 4, wobei der Poly(phenylenether) ein Poly(phenylenether)-Polysiloxan-Blockcopolymer umfasst.

6. Zusammensetzung nach irgendeinem oder mehreren der Ansprüche 1 bis 5, wobei der Poly(phenylenether) eine Grenzviskosität von 0,1 bis 0,6 Deziliter pro Gramm aufweist, wie gemessen in Chloroform bei 25 °C unter Verwendung eines Ubbelohde-Viskosimeters.

7. Zusammensetzung nach irgendeinem oder mehreren der Ansprüche 1 bis 6, wobei der Polyester ein Poly((C₁₋₈-alkylen)terephthalat) umfasst, vorzugsweise wobei das Poly((C₁₋₈-alkylen)terephthalat) ein Poly(ethylenterephthalat), ein Poly(butylenterephthalat) oder eine Kombination davon, bevorzugt ein Poly(butylenterephthalat), ist.

8. Zusammensetzung nach irgendeinem oder mehreren der Ansprüche 1 bis 7, wobei das Metalldi(C₁₋₆-Alkyl)phosphinat Aluminiumdiethylphosphinat umfasst.

9. Zusammensetzung nach irgendeinem oder mehreren der Ansprüche 1 bis 8, wobei das stickstoffhaltige Flammschutzmittel Melaminpolyphosphat, Melamincyanurat, Melaminpyrophosphat, Melaminphosphat oder eine Kombination davon, vorzugsweise Melaminpolyphosphat, umfasst.

10. Zusammensetzung nach irgendeinem oder mehreren der Ansprüche 1 bis 9, weiterhin umfassend eine Additivzusammensetzung, die ein Antioxidans, ein Gleitmittel, einen thermischen Stabilisator, ein UV-Licht absorbierendes Additiv, einen Weichmacher, ein Antitropfmittel, ein Formtrennmittel, ein Antistatikmittel, einen Farbstoff, ein Pigment, ein Lasermarkierungsadditiv, einen Strahlungsstabilisator, einen Verträglichkeitsmacher, ein Lichtbogenunterdrückungsmittel, oder eine Kombination davon umfasst.

11. Zusammensetzung nach irgendeinem oder mehreren der Ansprüche 1 bis 10, weiterhin umfassend einen Schlagzähmodifikator, vorzugsweise ein hydriertes Blockcopolymer von einem alkenylaromatischen Monomer und einem konjugierten Dien, besonders bevorzugt wobei das hydrierte Blockcopolymer ein Polystyrol-Poly(ethylen-butylen)-Polystyrol-Triblockcopolymer mit einem Polystyrolgehalt von 5 bis 20 Gewichtsprozent ist, bezogen auf das Gewicht des Polystyrol-Poly(ethylen-propylen)-Polystyrol-Triblockcopolymers.

12. Zusammensetzung nach Anspruch 1, umfassend
5 bis 15 Gewichtsprozent eines Poly(phenylenethers), umfassend Poly(2,6-dimethyl-1,4-phenylenether), ein Poly(phenylenether)-Polysiloxan-Blockcopolymer, oder eine Kombination davon;
30 bis 60 Gewichtsprozent eines Poly(butylenterephthalats);
10 bis 35 Gewichtsprozent eines verstärkenden Füllstoffs, der Glasfasern umfasst; und
5 bis 15 Gewichtsprozent Aluminiumdiethylphosphinat;
0,5 bis 5 Gewichtsprozent Melaminpolyphosphat;
2 bis 15 Gewichtsprozent eines hydrierten Blockcopolymers von einem alkenylaromatischen Monomer und einem konjugierten Dien; und
0,1 bis 5 Gewichtsprozent einer Additivzusammensetzung;
wobei der Gewichtsprozentsatz jeder Komponente auf das Gesamtgewicht der Zusammensetzung bezogen ist.

13. Zusammensetzung nach irgendeinem oder mehreren der Ansprüche 1 bis 12, wobei die Zusammensetzung
eine Vergleichs-Kriechstrom (Tracking)-Index-Leistungsniveau-Kategorie von 2 oder besser;
eine Hochspannungs-Kriechstrom (Tracking)-Widerstands-Leistungsniveau-Kategorie von 5 oder besser;
oder beides zeigt.

14. Zusammensetzung nach irgendeinem oder mehreren der Ansprüche 1 bis 13, wobei die Zusammensetzung Melamincyanurat, ein Poly(etherimid), oder beides ausschließt.

15. Gegenstand, der die Zusammensetzung nach irgendeinem oder mehreren der Ansprüche 1 bis 14 umfasst, wobei der Artikel vorzugsweise ein Spritzgussgegemstand ist, noch bevorzugter ein Leistungsschalter oder ein elektrischer Steckverbinder ist.

## Revendications

1. Composition comprenant :
30 à 75 pour cent en poids d'un polyester ;
1 à 20 pour cent en poids d'un poly(phénylène éther) ;
1 à 35 pour cent en poids d'une charge de renforcement comprenant des fibres de verre ; et
1 à 20 pour cent en poids d'un di(alkyle en C₁₋₆)-phosphinate de métal ; et
0,5 à 5 pour cent en poids d'un retardateur de flamme azoté ;
dans laquelle le pourcentage en poids de chaque composant est rapporté au poids total de la composition.

2. Composition selon la revendication 1, la composition présentant une ou plusieurs des propriétés suivantes :
une tenue au feu UL94 de V0, déterminée par utilisation d'un échantillon moulé de 3,0 millimètres d'épaisseur comprenant la composition ;
une tenue au feu UL94 de V0 ou V1 déterminée par utilisation d'un échantillon moulé de 1,0 millimètre d'épaisseur comprenant la composition, de préférence une tenue au feu UL94 de V0 déterminée par utilisation d'un échantillon moulé de 1,0 millimètre d'épaisseur comprenant la composition ;
une résistance au choc Charpy de 2,4 kJ/m² ou plus, déterminée selon ISO 179 à 23 °C ;
un module d'élasticité en flexion supérieur à 4 300 MPa, déterminé selon ISO 178 ;
une température de déformation à chaud supérieure à 200 °C, déterminée selon ISO 75 pour une vitesse de montée en température de 120 °C/heure ; et
un allongement à la rupture de 1,5 à 3,5 %, déterminé selon ASTM D638-03.

3. Composition selon la revendication 1 ou 2, dans laquelle la composition a une densité inférieure ou égale à 1,50, telle que déterminée selon ASTM D792-10.

4. Composition selon une ou plusieurs des revendications 1 à 3, dans laquelle le poly(phénylène éther) comprend un poly(2,6-diméthyl-1,4-phénylène éther).

5. Composition selon une ou plusieurs des revendications 1 à 4, dans laquelle le poly(phénylène éther) comprend un copolymère à blocs poly(phénylène éther)-polysiloxane.

6. Composition selon une ou plusieurs des revendications 1 à 5, dans laquelle le poly(phénylène éther) a une viscosité intrinsèque de 0,1 à 0,6 décilitre par gramme, telle que mesurée dans le chloroforme à 25 °C à l'aide d'un viscosimètre Ubbelohde.

7. Composition selon une ou plusieurs des revendications 1 à 6, dans laquelle le polyester comprend un poly(téréphtalate d'alkylène en C₁₋₈), de préférence dans laquelle le poly(téréphtalate d'alkylène en C₁₋₈) est un poly(téréphtalate d'éthylène), un poly(téréphtalate de butylène) ou une combinaison de ceux-ci, de préférence un poly(téréphtalate de butylène).

8. Composition selon une ou plusieurs des revendications 1 à 7, dans laquelle le di(alkyle en C₁₋₆)-phosphinate de métal comprend du diéthylphosphinate d'aluminium.

9. Composition selon une ou plusieurs des revendications 1 à 8, dans laquelle le retardateur de flamme azoté comprend du polyphosphate de mélamine, du cyanurate de mélamine, du pyrophosphate de mélamine, du phosphate de mélamine ou une combinaison de ceux-ci, de préférence du polyphosphate de mélamine.

10. Composition selon une ou plusieurs des revendications 1 à 9, comprenant en outre une composition d'additifs comprenant un antioxydant, un lubrifiant, un thermostabilisant, un additif absorbant la lumière ultraviolette, un plastifiant, un agent anti-goutte, un agent de démoulage, un agent antistatique, un colorant, un pigment, un additif de marquage laser, un stabilisant contre les rayonnements, un agent de compatibilisation, un suppresseur d'arc ou une combinaison de ceux-ci.

11. Composition selon une ou plusieurs des revendications 1 à 10, comprenant en outre un modifiant choc, de préférence un copolymère à blocs hydrogénés d'un monomère alcénylaromatique et d'un diène conjugué, plus particulièrement dans laquelle le copolymère à blocs hydrogénés est un copolymère tribloc polystyrène-poly(éthylène-butylène)-polystyrène ayant une teneur en polystyrène de 5 à 20 pour cent en poids par rapport au poids du copolymère tribloc polystyrène-poly(éthylène-propylène)-polystyrène.

12. Composition selon la revendication 1, comprenant
5 à 15 pour cent en poids d'un poly(phénylène éther) comprenant du poly(2,6-diméthyl-1,4-phénylène éther), d'un copolymère à blocs poly(phénylène éther)-polysiloxane ou une combinaison de ceux-ci ;
30 à 60 pour cent en poids d'un poly(téréphtalate de butylène) ;
10 à 35 pour cent en poids d'une charge de renforcement comprenant des fibres de verre ; et
5 à 15 pour cent en poids de diéthylphosphinate d'aluminium ;
0,5 à 5 pour cent en poids de polyphosphate de mélamine ;
2 à 15 pour cent en poids d'un copolymère à blocs hydrogénés d'un monomère alcénylaromatique et d'un diène conjugué ; et
0,1 à 5 pour cent en poids d'une composition d'additifs ; le pourcentage en poids de chaque composant étant rapporté au poids total de la composition.

13. Composition selon une ou plusieurs des revendications 1 à 12, dans laquelle la composition présente :
une catégorie de niveau de performance de l'indice de tenue au cheminement de 2 ou mieux ;
une catégorie de niveau de performance de résistance au cheminement en haute tension de 5 ou mieux ;
ou les deux.

14. Composition selon une ou plusieurs des revendications 1 à 13, la composition ne contenant ni cyanurate de mélamine, ni poly(étherimide), ni les deux.

15. Article comprenant la composition selon une ou plusieurs des revendications 1 à 14, l'article étant de préférence un article moulé par injection, plus particulièrement un disjoncteur ou un connecteur électrique.
